# EUROPEAN PATENT APPLICATION

(11) **EP 2 581 236 A1**
(43) Date of publication of application: **17.04.2013**
(21) Application number: 11795698.7
(22) Date of filing: 13.06.2011
(51) Int. Cl.: B60B 35/18, B60B 35/14, F16C 19/18, F16C 33/64, F16C 35/063, F16D 3/20

(54) **VEHICLE-WHEEL BEARING DEVICE**

(30) Priority: 14.06.2010 JP 2010134856
(71) Applicant: NTN Corporation, Osaka-shi, Osaka 550-0003 (JP)
(72) Inventor: YAMAMOTO, Kazunari, Iwata-shi Shizuoka 438-8510 (JP); UCHIYAMA, Nobukatsu, Iwata-shi Shizuoka 438-8510 (JP)
(74) Representative: Cohausz & Florack
(86) International application number: PCT/JP2011/063513
(87) International publication number: WO 2011/158793

(57) **Abstract**

An object of the present invention is to provide a wheel bearing apparatus for a vehicle which can reduce the sudden slip between the inner member (particularly the caulked portion) and the shoulder portion of the outer joint member and thus can prevent generation of the stick-slip noise. According to the present invention, there is provided a wheel bearing apparatus for a vehicle comprising an outer member integrally formed on its inner circumference with double row outer raceway surfaces; an inner member including a wheel hub and at least one inner ring; seals mounted in openings of annular space formed between the outer member and the inner member; the inner ring being axially immovably secured relative to the wheel hub by a caulked portion formed by plastically deforming an end of the cylindrical portion radially outward; a constant velocity universal joint connected to the wheel hub; an outer joint member of the constant velocity universal joint comprising a cup-shaped mouth portion, a shoulder portion forming a bottom of the mouth portion, and a stem portion fitted into the wheel hub via serrations with a torque transmittable manner; and the wheel hub and the outer joint member being axially detachably connected with the shoulder portion being abutted against the caulked portion characterized in that the end face of the caulked portion is formed as having a flat surface and a cap is mounted on the caulked portion; and that the cap comprises a core metal press-formed of a corrosion resistant steel sheet as having a generally ring shape having a substantially L-shaped cross-section, the inner diameter of the core metal being set slightly smaller than the outer diameter of the caulked portion, and a molded portion formed of synthetic resin having on its surface an infinite number of micro indentations, the cap being abutted against the end face of the caulked portion and the shoulder portion of the outer joint member.

## Description

### Field of the Invention

The present invention relates to a wheel bearing apparatus for a vehicle for supporting a wheel of a vehicle such as an automobile, and more particularly to a wheel bearing apparatus including a wheel bearing and a constant velocity universal joint for rotationally supporting a driving wheel (front wheel of an FF vehicle, a rear wheel of an FR or RR vehicle and whole wheels of 4WD vehicle) mounted on an independent suspension relative to the suspension apparatus.

### Description of Background Art

In a power transmitting apparatus for transmitting an engine power of a vehicle such as an automobile to wheels, it is necessary not only to transmit the power from an engine to wheels, but to allow radial and axial displacements and a moment displacement from wheels caused by bounds or turns of a vehicle during running on a rough road. Accordingly the power transmitting apparatus is connected to the driving wheel via a wheel bearing apparatus including a constant velocity universal joint in which one end of a driving shaft arranged between an engine side and the driving wheel side is connected to a differential gear unit via a constant velocity universal joint of a sliding type and the other end thereof is a secured type.

It is known in such a vehicle that a large torque is transmitted to its wheels from the engine via the constant velocity universal joint of sliding type on start of vehicle at a low engine speed and accordingly torsion is caused in the driving shaft. As the result of which, the torsion is also caused in an inner member of the wheel bearing for supporting the driving shaft and thus the stick-slip noise is caused by a sudden slip between abutting surfaces of an outer joint member of the constant velocity universal joint and the inner member when the large torsion is caused in the driving shaft.

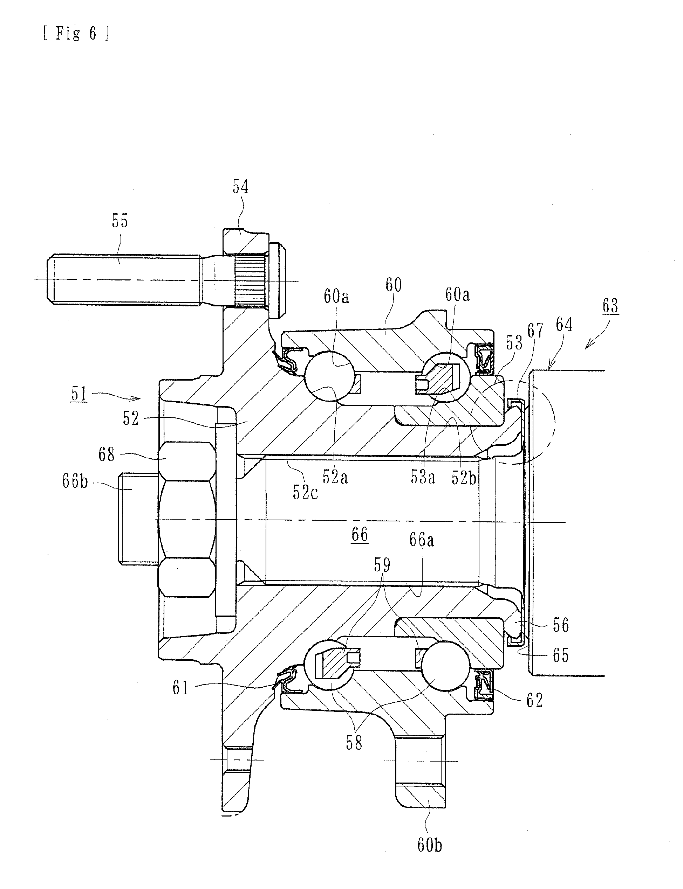

For coping with this problem, it is known a wheel bearing apparatus for example shown in Fig. 6. This wheel bearing apparatus comprises an inner member 51, an outer member 60, double row balls 58, 58 rollably contained between the inner and outer members 51, 60 and a constant velocity universal joint 63 detachably connected to a wheel bearing. The inner member comprises a wheel hub 52 and an inner ring 53 press-fitted onto the wheel hub 52.

The wheel hub 52 is integrally formed with a wheel mounting flange 54 on its one end for mounting a wheel (not shown) and also formed with one inner raceway surface 52a on its outer circumference and a cylindrical portion 52b axially extending from the inner raceway surface 52a and additionally formed with a serration 52c on its inner circumference for torque transmission. Hub bolts 55 are arranged equidistantly along the periphery of the wheel mounting flange 54.

The inner ring 53 formed on its outer circumference with the other inner raceway surface 53a is press-fitted onto the cylindrical portion 52b of the wheel hub 52 and axially secured thereon by a caulked portion 56 formed by plastically deforming the end of the cylindrical portion 52b radially outward.

The outer member 60 is integrally formed on its outer circumference with a body mounting flange 60b to be mounted on a body of a vehicle (not shown) and on its inner circumference with double row outer raceway surfaces 60a, 60a opposite to the inner raceway surfaces 52a, 53a of the inner member 51. Double row balls 58, 58 are contained between these outer and inner raceway surfaces 60a, 52a and 60a, 53a of the outer member 60 and the inner member 51 and rollably held by cages 59, 59. Seals 61, 62 are mounted within annular openings formed between the outer member 60 and the inner member 51. These seals 61, 62 prevent leakage of grease contained in the bearing and enter of rainwater and dusts into the bearing from outside.

The constant velocity universal joint 63 comprises an outer joint member 64, a joint inner ring and torque transmitting balls (not shown). The outer joint member 64 is integrally formed with a cup shaped mouth portion (not shown), a shoulder portion 65 forming a bottom of the mouth portion, and a stem portion 66 axially extending from the shoulder portion 65. The stem portion 66 is formed on its outer circumference with a serration 66a engaging with a serration 52a formed on the wheel hub 52 and formed with an external thread 66b on the end of the serration 66a. The stem portion 66 of the outer joint member 64 is inserted into the wheel hub 52 until the shoulder portion 65 abuts against the caulked portion 56 of the wheel hub 51 via a cap 67 hereinafter described and then a securing nut 68 is fastened onto an external thread 66b with a predetermined fastening torque to enable the wheel hub 52 and the outer joint member 64 to be detachably connected.

The cap 67 is secured with being sandwiched between the caulked 56 and the shoulder portion 65 of the outer joint member 64. The cap 67 is press-formed of austenitic-stainless steel sheet having corrosion resistance and the surface roughness of 0.63 or less so as to have a substantially L-shaped cross-section.

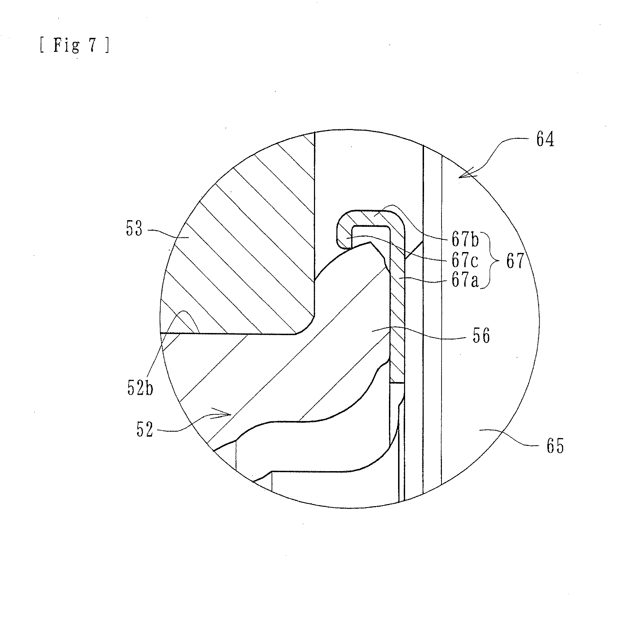

As shown in an enlarged view of Fig. 7, the cap 67 comprises a disc shaped abutting portion 67a, a cylindrical portion 67b axially extending from a radially outermost portion of the abutting portion 67a, and an anchoring portion 67c bent radially inward from the end of the cylindrical portion 67b. The inner diameter of the anchoring portion 67c of the cap 17 is set slightly smaller than the outer diameter of the caulked portion 56 and adapted to be mounted on the caulked portion 56 by elastically deforming the anchoring portion 67c. This enables one-touch mounting of the cap 67 onto the caulked portion 56 and thus enables to prevent the cap 67 from being slipped off from the caulked portion 56 during assembling step. In addition, it is possible to prevent generation of the stick-slip noise due to reduction of the coefficient of friction and thus suppression of sudden slip generated between the caulked portion 56 and the shoulder portion 65 (see e.g. Patent Document 1 below).

### Technical Documents of the Prior art

### Patent Document

Patent Document 1 : Japanese Laid-open Patent Publication No. 296841/2008

### Disclosure of the Invention

### Problems to be solved by the Invention

However, in the wheel bearing apparatus for a vehicle of the prior art, it is afraid that adhesion due to metal-to-metal contact would be caused in abutting surfaces between opposite surfaces of the cap 67 and a surface of the shoulder portion 65 of the outer joint member 64 and/or a surface of the caulked portion 56 and accordingly the stick-slip noise would be caused when the adhesion is broken.

It is, therefore, an object of the present invention to provide a wheel bearing apparatus for a vehicle which can reduce the sudden slip between the inner member (particularly the caulked portion) and the shoulder portion of the outer joint member and thus can prevent generation of the stick-slip noise.

### Means for solving the Problems

For achieving the object of the present invention, there is provided, according to claim 1 of the present invention, a wheel bearing apparatus for a vehicle comprising an outer member integrally formed on its inner circumference with double row outer raceway surfaces; an inner member including a wheel hub and at least one inner ring and being formed with double row inner raceway surfaces arranged oppositely to the double row outer raceway surfaces, the wheel hub being integrally formed on its one end with a wheel mounting flange and on its other end with an axially extending cylindrical portion, and the inner ring being press fitted onto the cylindrical portion of the wheel hub; double row rolling elements rollably contained between the double row inner and outer raceway surfaces of the inner member and the outer member via cages; seals mounted in openings of annular space formed between the outer member and the inner member; the inner ring being axially immovably secured relative to the wheel hub by a caulked portion formed by plastically deforming an end of the cylindrical portion radially outward; a constant velocity universal joint connected to the wheel hub; an outer joint member of the constant velocity universal joint comprising a cup-shaped mouth portion, a shoulder portion forming a bottom of the mouth portion, and a stem portion fitted into the wheel hub via serrations with a torque transmittable manner; and the wheel hub and the outer joint member being axially detachably connected with the shoulder portion being abutted against the caulked portion characterized in that the end face of the caulked portion is formed as having a flat surface and a cap is mounted on the caulked portion; and that the cap comprises a core metal press-formed of a corrosion resistant steel sheet as having a generally ring shape having a substantially L-shaped cross-section, and a molded portion formed of synthetic resin having on its surface an infinite number of micro indentations, the cap being abutted against the end face of the caulked portion and the shoulder portion of the outer joint member.

According to the wheel bearing apparatus for a vehicle of claim 1 of the present invention, since the inner ring being axially immovably secured relative to the wheel hub by a caulked portion formed by plastically deforming an end of the cylindrical portion of the wheel hub radially outward; a constant velocity universal joint connected to the wheel hub; an outer joint member of the constant velocity universal joint comprising a cup-shaped mouth portion, a shoulder portion forming a bottom of the mouth portion, and a stem portion fitted into the wheel hub via serrations with a torque transmittable manner; and the wheel hub and the outer joint member being axially detachably connected with the shoulder portion being abutted against the caulked portion characterized in that the end face of the caulked portion is formed as having a flat surface and a cap is mounted on the caulked portion; and that the cap comprises a core metal press-formed of a corrosion resistant steel sheet as having a generally ring shape having a substantially L-shaped cross-section, and a molded portion formed of synthetic resin having on its surface an infinite number of micro indentations, the cap being abutted against the end face of the caulked portion and the shoulder portion of the outer joint member, it is possible not only to suppress wear of the cap and thus to improve its durability but also to prevent generation of the stick-slip noise by reducing a sudden slip generated between the caulked portion and the shoulder portion of the outer joint member with reducing the coefficients of friction of the abutting surfaces.

It is preferable as defined in claim 2 that the molded portion has the surface roughness of Ra 1.6 or less. This enables to prevent the generation of the stick-slip noise by reducing the coefficient of friction.

It is preferable as defined in claim 3 that the surface of the core metal is formed with an infinite number of micro indentations. This enables to further effectively prevent the generation of the stick-slip noise by reducing a sudden slip generated between the caulked portion and the shoulder portion of the outer joint member with reducing the coefficients of friction of the abutting surfaces.

It is also preferable as defined in claim 4 that the indentations of the core metal are formed by shot blasting and have the surface roughness of Ra 1.6 or less. This enables to reduce the coefficient of friction and thus to prevent generation of the stick-slip noise.

It is preferable as defined in claim 5 that the core metal comprises a disc-shaped portion, a cylindrical portion axially extending from a radially outermost portion of the disc-shaped portion, and an anchoring portion projecting radially inward from the cylindrical portion, that the molded portion is adhered to the disc-shaped portion, and that the inner diameter of the anchoring portion of the core metal is set slightly smaller than the outer diameter of the caulked portion. This makes it possible to easily mount the cap onto the caulked portion by a snap-fit manner and accordingly to improve the workability in assembly.

It is also preferable as defined in claim 6 that the core metal is formed as an open ended ring shape or as defined in claim 7 that a plurality of the anchoring portions are formed equidistantly along the periphery of the core metal.

It is preferable as defined in claim 8 that lubricant is applied between the caulked portion and the shoulder portion of the outer joint member. This enables to reduce the coefficients of friction of the abutting surfaces and thus to further effectively prevent generation of the stick-slip noise as well as to suppress wear of the caulked portion and the cap.

It is preferable as defined in claim 9 that a number of through apertures are formed on the disc-shaped portion of the core metal. This makes it possible to hold the lubricant applied to the abutting surfaces in the through apertures and thus to further reduce the coefficients friction of the abutting surfaces and accordingly wears thereof.

It is also preferable as defined in claim 10 that the end face of the caulked portion and the shoulder portion of the outer joint member have the surface roughness of Ra 1.6 or less. This enables to suppress wear of the cap and thus to improve its durability.

It is preferable as defined in claim 11 that the end face of the caulked portion is formed with an annular groove, and that the disc-shaped portion of the core metal is formed with an annular projection axially projected therefrom so as to be engaged with the annular groove. This makes it possible to easily achieve a radial positioning of the cap relative to the caulked portion, to prevent slipping-off of the cap during transportation or assembly of the wheel bearing, to surely prevent tilted mount of the cap during its assembly, and thus to improve the reliability of assembly.

It is preferable as defined in claim 12 that the molded portion is formed of fiber reinforced thermoplastic synthetic resin. This enables to reduce the coefficient of friction and accordingly the wear of the molded portion, and to improve its strength and durability.

It is also preferable as defined in claim 13 that the molded portion is formed of biodegradable synthetic resin. This enables to reduce the environmental load.

### Effects of the Invention

According to the wheel bearing apparatus for a vehicle of the present invention, since it comprises an outer member integrally formed on its inner circumference with double row outer raceway surfaces; an inner member including a wheel hub and at least one inner ring and being formed with double row inner raceway surfaces arranged oppositely to the double row outer raceway surfaces, the wheel hub being integrally formed on its one end with a wheel mounting flange and on its other end with an axially extending cylindrical portion, and the inner ring being press fitted onto the cylindrical portion of the wheel hub; double row rolling elements rollably contained between the double row inner and outer raceway surfaces of the inner member and the outer member via cages; seals mounted in openings of annular space formed between the outer member and the inner member; the inner ring being axially immovably secured relative to the wheel hub by a caulked portion formed by plastically deforming an end of the cylindrical portion radially outward; a constant velocity universal joint connected to the wheel hub; an outer joint member of the constant velocity universal joint comprising a cup-shaped mouth portion, a shoulder portion forming a bottom of the mouth portion, and a stem portion fitted into the wheel hub via serrations with a torque transmittable manner; and the wheel hub and the outer joint member being axially detachably connected with the shoulder portion being abutted against the caulked portion and is characterized in that the end face of the caulked portion is formed as having a flat surface and a cap is mounted on the caulked portion; and that the cap comprises a core metal press-formed of a corrosion resistant steel sheet as having a generally ring shape having a substantially L-shaped cross-section, and a molded portion formed of synthetic resin having on its surface an infinite number of micro indentations, the cap being abutted against the end face of the caulked portion and the shoulder portion of the outer joint member, it is possible not only to suppress wear of the cap and thus to improve its durability but also to prevent generation of the stick-slip noise by reducing a sudden slip generated between the caulked portion and the shoulder portion of the outer joint member with reducing the coefficients of friction of the abutting surfaces.

### Brief Descriptions of Drawings

[Fig. 1] A longitudinal section view showing a first embodiment of the wheel bearing apparatus for a vehicle of the present invention;
[Fig. 2] A partially enlarged view of Fig. 1;
[Fig. 3] (a) a front elevation view showing a cap of Fig. 2, and (b) a cross-sectional view taken along a line III-III of Fig. 3(a);
[Fig. 4] (a) a front elevation view showing one modification of the cap of Fig. 2, and (b) a cross-sectional view taken along a line IV-IV of Fig. 4(a);
[Fig. 5] A partially enlarged view showing another modification of the cap of Fig. 2;
[Fig. 6] A longitudinal section view showing a wheel bearing apparatus for a vehicle of the prior art; and
[Fig. 7] A partially enlarged view of Fig. 6.

### Preferable mode for carrying out the Invention

One preferable mode for carrying out the present invention is a wheel bearing apparatus for a vehicle comprising an outer member integrally formed on its outer circumference with a body mounting flange and on its inner circumference with double row outer raceway surfaces; an inner member including a wheel hub and an inner ring, the wheel hub being integrally formed on its one end with a wheel mounting flange, on its outer circumference with one inner raceway surface corresponding to one of the outer raceway surface and on its other end with a cylindrical portion, and the inner ring being press fitted onto the cylindrical portion of the wheel hub and being formed with the other inner raceway surface corresponding to the other of the double row outer raceway surfaces; double row rolling elements rollably contained between the double row inner and outer raceway surfaces of the inner member and the outer member via cages; seals mounted in openings of annular space formed between the outer member and the inner member; the inner ring being axially immovably secured relative to the wheel hub by a caulked portion formed by plastically deforming an end of the cylindrical portion radially outward; a constant velocity universal joint connected to the wheel hub; an outer joint member of the constant velocity universal joint comprising a cup-shaped mouth portion, a shoulder portion forming a bottom of the mouth portion, and a stem portion fitted into the wheel hub via serrations with a torque transmittable manner; and the wheel hub and the outer joint member being axially detachably connected with the shoulder portion being abutted against the caulked portion characterized in that the end face of the caulked portion is formed as having a flat surface and a cap is mounted on the caulked portion; and that the cap comprises a core metal press-formed of a corrosion resistant steel sheet as having a generally ring shape having a substantially L-shaped cross-section, and a molded portion formed of synthetic resin having on its surface an infinite number of micro indentations, the cap being abutted against the end face of the caulked portion and the shoulder portion of the outer joint member.

### Embodiments

Preferable embodiments of the present invention will be hereinafter described with reference to the drawings.

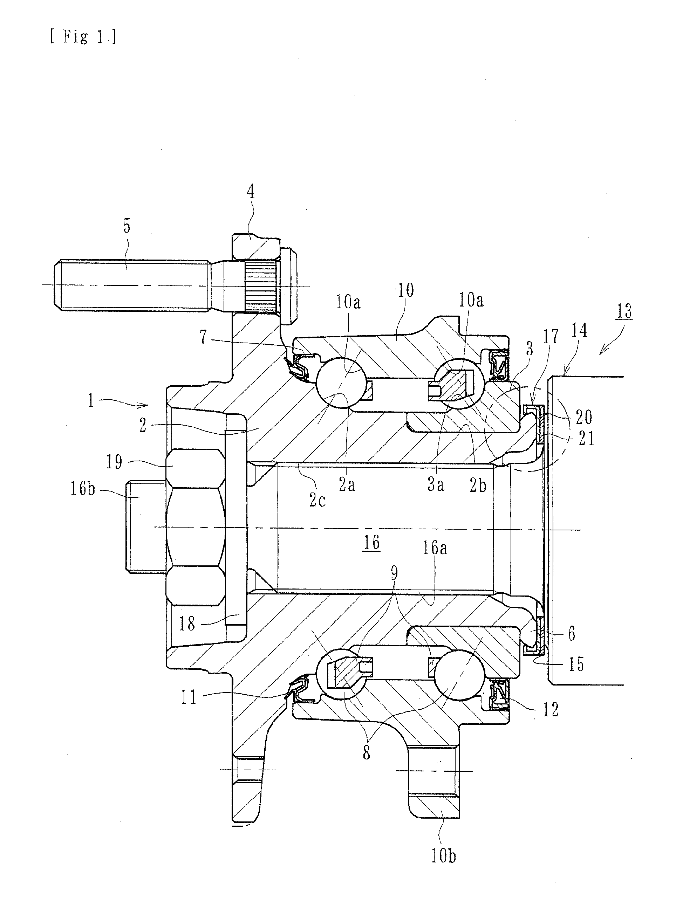

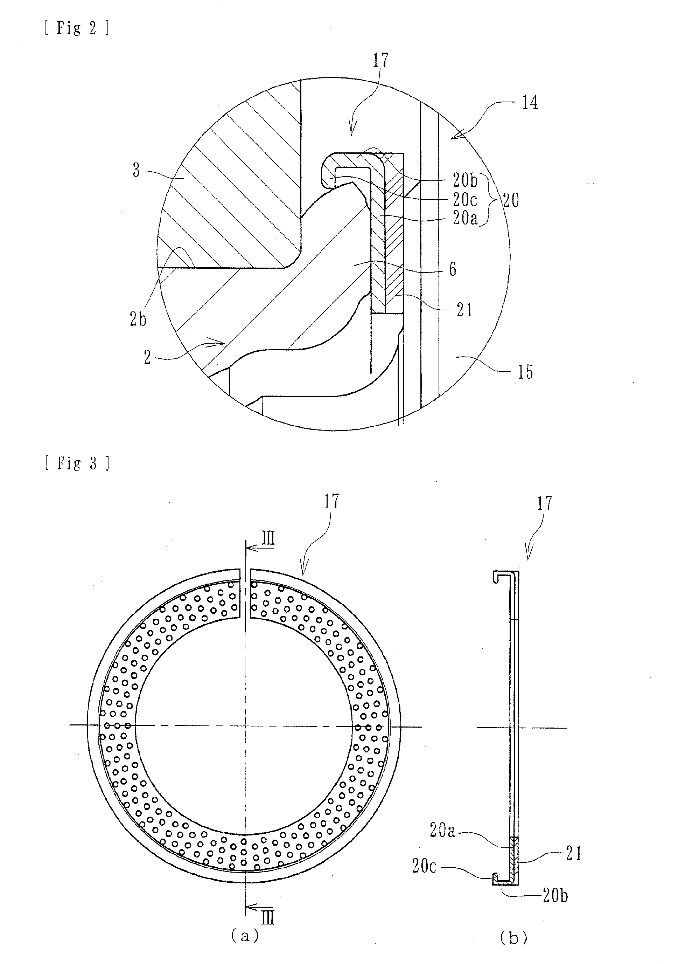

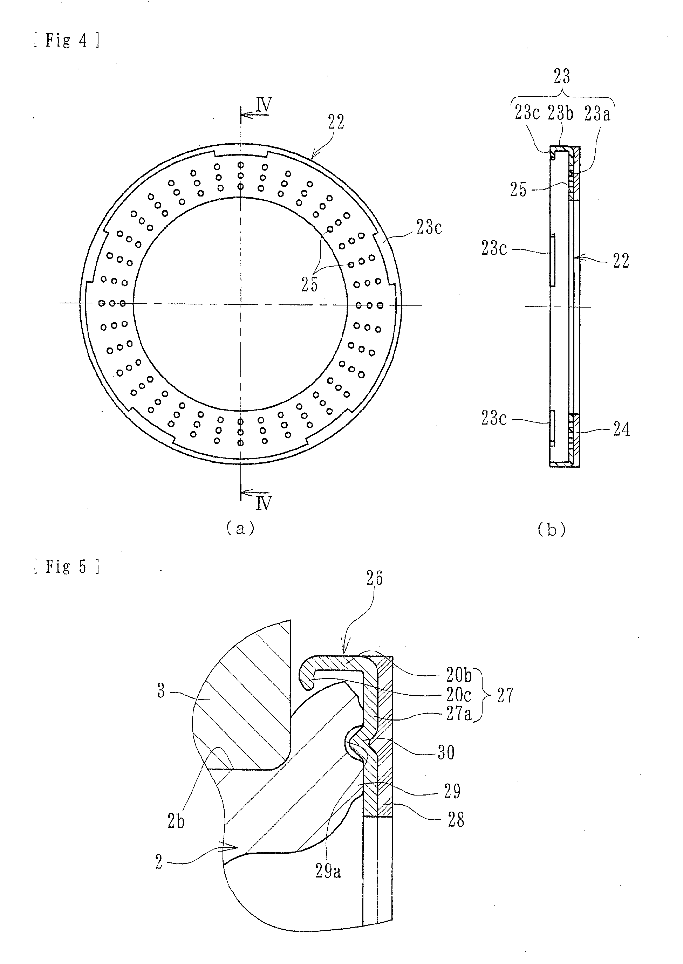

Fig. 1 is a longitudinal section view showing a first embodiment of the wheel bearing apparatus for a vehicle of the present invention, Fig. 2 is a partially enlarged view of Fig. 1, Fig. 3(a) is a front elevation view showing a cap of Fig. 2, and Fig. 3(b) is a cross-sectional view taken along a line III-III of Fig. 3(a), Fig. 4(a) is a front elevation view showing one modification of the cap of Fig. 2, and Fig. 4(b) is a cross-sectional view taken along a line IV-IV of Fig. 4(a), and Fig. 5 is a partially enlarged view showing another modification of the cap of Fig. 2. In the description below, a term "outer side" of the apparatus denotes a side which is positioned outside of the vehicle body (the left-side in a drawing) and a term "inner side" of the apparatus denotes a side which is positioned inside of the body (the right-side in a drawing) when the bearing apparatus is mounted on the vehicle body.

The bearing apparatus for a wheel of vehicle of the present invention is a third generation type used for a driven wheel and comprises an inner member 1, an outer member 10, and double row rolling elements (balls) 8, 8 for rollably contained between the inner and outer members 1, 10. The inner member 1 comprises a wheel hub 2 and an inner ring 3 secured on the wheel hub 2.

The wheel hub 2 is integrally formed with a wheel mounting flange 4 at its one end, one (outer side) inner raceway surface 2a on its outer circumference, a cylindrical portion 2b axially extending from the inner raceway surface 2a, and a serration (or spline) 2c on its inner circumference. Hub bolts 5 are arranged on the wheel mounting flange 4 equidistantly along the periphery of the wheel mounting flange 4.

The wheel hub 2 is made of medium/high carbon steel including carbon of 0.40∼0.80% by weight such as S53C and hardened by high frequency induction quenching so that a region from an inner side base 7 of the wheel mounting flange 4 forming a seal-land portion to which an outer side seal 11 slide-contacts to the cylindrical portion 2b is hardened as having surface hardness of 58∼64 HRC. The inner ring formed on its outer circumference with the other (inner side) inner raceway surface 3a is press-fitted onto the cylindrical portion 2b of the wheel hub 2 via a predetermined interference and axially immovably secured by a caulked portion 6 formed by plastically deforming the end of the cylindrical portion 2b radially outward. Since the end face of the caulked portion 6 is formed as a flat surface, it is possible to reduce the bearing pressure applied to the caulked portion by an axial force and thus to reduce a plastic deformation and wear of the caulked portion 6. On the other hand the inner ring 3 and balls 8 are made of high carbon chrome steel such as SUJ2 and hardened to their core by dipping quenching so as to have a surface hardness of 58∼64 HRC.

The outer member 10 is integrally formed on its outer circumference with a body mounting flange 10b to be mounted on a body of a vehicle (not shown) and on its inner circumference with double row outer raceway surfaces 10a, 10a opposite to the inner raceway surfaces 2a, 3a of the inner member 1. The outer member 10 is made of medium/high carbon steel including carbon of 0.40∼0.80%by weight such as S53C and at least the double row outer raceway surfaces 10a, 10a are hardened by high frequency induction quenching so as to have a surface hardness of 58∼64 HRC. Double row balls 8, 8 are contained between these outer and inner raceway surfaces 10a, 2a and 10a, 3a of the outer member 10 and the inner member 1 and rollably held by cages 9, 9. Seals 11, 12 are mounted within annular openings formed between the outer member 10 and the inner member 1. These seals 8, 9 prevent leakage of grease contained in the bearing and enter of rainwater and dusts into the bearing from outside.

Although it is shown herein a wheel bearing apparatus formed by a double row angular contact ball bearing using balls as rolling elements 8, the present invention is not limited to such a bearing and may be applied to a double row tapered roller bearing using tapered rollers as rolling elements 8. In addition although the structure shown here is a so-called third generation type bearing structure, the wheel bearing apparatus of the present invention is not limited to such a structure and may be applied to bearing structures of so-called a first or second generation type in which a pair of inner rings are press-fitted onto a cylindrical portion of a wheel hub.

The constant velocity universal joint 13 comprises an outer joint member 14, a joint inner ring, a cage and torque transmitting balls (not shown). The outer joint member 14 is made of medium/high carbon steel including carbon of 0.40∼0.80% by weight such as S53C and comprises an integrally formed cup shaped mouth portion (not shown), a shoulder portion 15 forming a bottom of the mouth portion, and a stem portion 16 axially extending from the shoulder portion 15. The stem portion 16 is formed on its outer circumference with a serration (or spline) 16a engaging a serration 2c of the wheel hub 2 and on its end with an outer thread (male thread) 16b. The stem portion 16 of the outer joint member 14 is inserted into the wheel hub 2 until the shoulder portion 15 abuts against the caulked portion 6 via a cap 17 later described. Finally a securing nut 18 is fastened to the outer thread 16b at a predetermined fastening torque and the wheel hub 2 and the outer joint member 14 are axially separably connected each other.

The cap 17 is mounted on the caulked portion 6 and secured with being sandwiched between the caulked portion 6 and the shoulder portion 15 of the outer joint member 14. The cap 17 comprises a core metal 20 and a molded portion 21 integrally adhered to the core metal 20 by injection molding. The core metal 20 is press-formed of a corrosion resistant steel sheet e.g. preserved cold rolled steel sheet (JIS SPCC etc.) or austenitic-stainless steel sheet (JIS SUS 304 etc.) as having a generally open ended ring shape having a substantially L-shaped cross-section. As shown in the enlarged view of Fig. 2, the core metal 20 comprises a disc-shaped portion 20a, a cylindrical portion 20b axially extending from a radially outermost portion of the disc-shaped portion 20a, and an anchoring portion 20c projecting radially inward from the cylindrical portion 20b. The inner diameter of the anchoring portion 20c of the core metal 20 is set slightly smaller than the outer diameter of the caulked portion 6 so that the cap 17 can be easily snap-fitted on the caulked portion 6 by elastically enlarging the diameter of the anchoring portion 20c. Accordingly, it is possible to improve the workability of assembly by mounting the cap 17 on the caulked portion 6 with one-touch manner.

On the other hand, the molded portion 21 is formed of fiber reinforced thermoplastic synthetic resin such as PA (polyamide) 66 etc. containing fibrous reinforcement such as GF (glass fiber) of 10∼40 weight% and adhered to the inner-side surface of the disc-shaped portion 20a of the core metal 20 by injection molding. In this case, the contents of GF less than 10 weight% cannot exhibit sufficient reinforcing effect, on the other hand the contents of GF exceeding 40 weight% causes anisotropy of fibers in a molded article and increases the density of GF and thus detracts the dimensional stability and toughness of the molded portion 21. Accordingly, it is afraid that the molded portion 21 would be cracked or broken by elastic deformation of the core metal 20 when the cap 17 is mounted on the caulked portion 6. The fibrous reinforcement is not limited to GF and other materials such as CF (carbon fiber), aramid fiber, boron fiber, etc. can be used as the fibrous reinforcement.

The molded portion 21 can be formed, other than PA 66, e.g. of thermoplastic resin so-called as engineering plastic such as PPA (polyphthal amide), PBT (polybutylene terephthalate) etc., thermoplastic resin so-called as super engineering plastic such as polyphenylene sulfide (PPS), polyetheretherketon (PEEK), polyamideimide (PAI) etc., or thermosetting resin such as phenol resin (PF), epoxy resin (EP), polyimide resin (PI) etc.. Furthermore, in order to reduce the environmental load, the molded portion 21 can be formed of biodegradable synthetic resin such as polylactic acid, polycaprolactone, polyglycol acid, denaturation polyvinyl alcohol, casein etc..

According to the present invention, the cap 17 is structured so that the core metal 20 of the cap 17 abuts against the end face of the caulked portion 6 and the molded portion 21 abuts against the shoulder portion 15 of the outer joint member 14 and an infinite number of micro indentations are formed on both surfaces of the core metal 20 and the molded portion 21. In particular, as shown in Fig. 3 the surface of the core metal 20 adapted to be abutted against the caulked portion 6 is formed with indentations by shot blasting and treated as having the surface roughness of Ra 1.6 or less, preferably Ra 0.32 or less. Herein, "Ra" denotes one of the roughness shape parameters of JIS (JIS B0601-1994) and means arithmetic roughness average of absolute value deviations from the average line.

On the other hand, an infinite number of micro indentations are formed also on the surface of the molded portion 21which is abutted against the shoulder portion 15 of the outer joint member 14. These indentations are formed by controlling a surface of the mold on molding and the surface roughness is set on Ra 1.6 or less, preferably Ra 0.32 or less. In addition, the surface roughness of the surfaces of the end face of the caulked portion 6 and the shoulder portion 15 of the outer joint member 14 is set on Ra 1.6 or less, preferably Ra 0.32 or less. The provision of such a cap 17 makes it possible to suppress wear of the cap 17 and thus to improve its durability. Furthermore, it is possible to reduce the coefficient of friction of each abutting surface and thus to suppress wear of the caulked portion 6, and to prevent generation of the stick-slip noise with reducing sudden slip caused between the caulked portion 6 and the shoulder portion 15 of the outer joint member 14.

Although it is shown, as one example, the cap 17 in which the molded portion 21 is abutted against the shoulder portion 15 of the outer joint member 14 and the side surface of the core metal 20 not having the molded portion 21 is abutted against the end face of the caulked portion 6, the present invention is not limited to such a cap 17 and can be applied to a cap in which the outer-side surface of the disc-shaped portion 20a of the core metal is formed with the molded portion 21 and abutted against the shoulder portion 15 of the outer joint member 14 and the molded portion 21 is abutted against the end face of the caulked portion 6.

Then, one modification of the cap 17 of Fig. 2 is shown in Fig. 4. This cap 22 also comprises a core metal 23 and a molded portion 24 integrally adhered to the core metal 23 by injection molding. The core metal 23 is press-formed of a corrosion resistant steel sheet e.g. preserved cold rolled steel sheet or austenitic-stainless steel sheet as having a ring shape having a substantially L-shaped cross-section. The core metal 23 comprises a disc-shaped portion 23a, a cylindrical portion 23b axially extending from a radially outermost portion of the disc-shaped portion 23a, and a plurality of claws (anchoring portion) 23c projecting radially inward from the cylindrical portion 23b. The claws 23c are arranged equidistantly along the periphery of the core metal 23 and the inner diameter formed by tip ends of the claws 23c of the core metal 23 is set slightly smaller than the outer diameter of the caulked portion so that the cap 22 can be easily snap-fitted on the caulked portion with one-touch manner by elastically enlarging the diameter of the claws 23c.

On the other hand, the molded portion 24 is formed of fiber reinforced thermoplastic synthetic resin such as PA 66 etc. containing fibrous reinforcement such as CF of 5∼40 weight% and adhered to the disc-shaped portion 23a of the core metal 23 by injection molding. In this case, the contents of CF less than 5 weight% cannot exhibit sufficient reinforcing effect, on the other hand the contents of CF exceeding 40 weight% causes reduction of toughness of the molded portion 24 and accordingly it is afraid that the molded portion 24 would be cracked or broken when the cap 22 is mounted on the caulked portion.

Lubricant such as grease etc. is applied between the caulked portion 6 and the shoulder portion 15 of the outer joint member 14 and a number of through apertures 25 are formed on the disc-shaped portion 23a of the core metal 23. The through apertures 25 can hold the lubricant applied to the abutting surfaces and thus to further reduce the coefficients of friction of the abutting surfaces and further effectively prevent generation of the stick-slip noise.

Fig. 5 shows another modification of the cap 17 of Fig. 2. This cap 26 comprises a core metal 27 and the molded portion 28 integrally adhered to the core metal 27 by injection molding. The core metal 27 is press-formed of a corrosion resistant steel sheet e.g. preserved cold rolled steel sheet or austenitic-stainless steel sheet as having a generally open ended ring shape having a substantially L-shaped cross-section and comprises a disc-shaped portion 27a, the cylindrical portion 20b axially extending from a radially outermost portion of the disc-shaped portion 20a, and the anchoring portion 20c projecting radially inward from the cylindrical portion 20b.

Similarly to the previously described embodiments, the core metal 27 of this embodiment is abutted against the caulked portion 29 and the molded portion 28 is abutted against the shoulder portion 15 and the surfaces of the core metal 27 and the mold portion 28 are formed with an infinite number of micro indentations. Furthermore, the end face of the caulked portion 29 is formed with an annular groove 29a, and the disc-shaped portion 27a of the core metal 27 is formed with an annular projection 30 axially projected therefrom so as to be engaged with the annular groove 29a. This makes it possible to easily achieve a radial positioning of the cap 26 relative to the caulked portion 29, to prevent slipping-off of the cap 26 during transportation or assembly of the wheel bearing, to surely prevent tilted mount of the cap 26 during its assembly, and thus to improve the reliability of assembly.

The present invention has been described with reference to the preferred embodiments. Obviously, modifications and alternations will occur to those of ordinary skill in the art upon reading and understanding the preceding detailed description. It is intended that the present invention be construed as including all such alternations and modifications insofar as they come within the scope of the appended claims or the equivalents thereof.

### Applicability in Industries

The present invention can be applied to a wheel bearing apparatus of the first through third generations comprising an inner member including a wheel hub and an inner ring and a constant velocity universal joint in which the inner member and an outer joint member of the constant velocity universal joint are separably fastened in an abutted condition. Descriptions of reference numerals

- 1: inner member
- 2: wheel hub
- 2a, 3a: inner raceway surface
- 2b: cylindrical portion
- 2c, 16a: serration
- 3: inner ring
- 4: wheel mounting flange
- 5: hub bolt
- 6, 29: caulked portion
- 7: base of wheel mounting flange
- 8: rolling element
- 9: cage
- 10: outer member
- 10a: outer raceway surface
- 10b: body mounting flange
- 11: outer-side seal
- 12: inner-side seal
- 13: constant velocity universal joint
- 14: outer joint member
- 15: shoulder portion
- 16: stem portion
- 16b: external thread
- 17, 22, 26: cap
- 18: washer
- 19: securing nut
- 20, 23, 27: core metal
- 20a, 23a, 27a: disc-shaped portion
- 20b, 23b: anchoring portion
- 21, 24, 28: molded portion
- 25: through aperture
- 29a: annular groove
- 30: projection
- 51: inner member
- 52: wheel hub
- 52a, 53a: inner raceway surface
- 52b: cylindrical portion
- 52c, 66a: serration
- 53: inner ring
- 54: wheel mounting flange
- 55: hub bolt
- 56: caulked portion
- 58: ball
- 59: cage
- 60: outer member
- 60a: outer raceway surface
- 60b: body mounting flange
- 61: outer-side seal
- 62: inner-side seal
- 63: constant velocity universal joint
- 64: outer joint member
- 65: shoulder portion
- 66: stem portion
- 66b: external thread
- 67: cap
- 67a: abutting portion
- 67b: cylindrical portion
- 67c: anchoring portion
- 68: securing nut

## Claims

1. A wheel bearing apparatus for a vehicle comprising:
an outer member (10) integrally formed on its inner circumference with double row outer raceway surfaces (10a, 10a);
an inner member (1) including a wheel hub (2) and at least one inner ring (3) and being formed with double row inner raceway surfaces (2a, 3a) arranged oppositely to the double row outer raceway surfaces (10a, 10a), the wheel hub (2) being integrally formed on its one end with a wheel mounting flange (4) and on its other end with an axially extending cylindrical portion (2b), and the inner ring (3) being press fitted onto the cylindrical portion (2b) of the wheel hub (2);
double row rolling elements (8, 8) rollably contained between the double row inner and outer raceway surfaces (2a, 3a and 10a, 10a) of the inner member (1) and the outer member (10) via cages (9);
seals (11, 12) mounted in openings of annular space formed between the outer member (10) and the inner member (1);
the inner ring (3) being axially immovably secured relative to the wheel hub (2) by a caulked portion (6, 29) formed by plastically deforming an end of the cylindrical portion (2b) radially outward;
a constant velocity universal joint (13) connected to the wheel hub (2);
an outer joint member (14) of the constant velocity universal joint (13) comprising a cup-shaped mouth portion, a shoulder portion (15) forming a bottom of the mouth portion, and a stem portion (16) fitted into the wheel hub (2) via serrations (2c, 16a) with a torque transmittable manner; and
the wheel hub (2) and the outer joint member (14) being axially detachably connected with the shoulder portion (15) being abutted against the caulked portion (6, 29) **characterized in:**
**that** the end face of the caulked portion (6, 29) is formed as having a flat surface and a cap (17, 22, 26) is mounted on the caulked portion (6, 29); and
**that** the cap (17, 22, 26) comprises a core metal (20, 23, 27) press-formed of a corrosion resistant steel sheet as having a generally ring shape having a substantially L-shaped cross-section, and a molded portion (21, 24, 28) formed of synthetic resin having on its surface an infinite number of micro indentations, the cap (17, 22, 26) being abutted against the end face of the caulked portion (6, 29) and the shoulder portion (15) of the outer joint member (14).

2. A wheel bearing apparatus for a vehicle of claim 1 wherein the molded portion (21, 24, 28) has the surface roughness of Ra 1.6 or less.

3. A wheel bearing apparatus for a vehicle of claim 1 or 2 wherein the surface of the core metal (20, 23, 27) is formed with an infinite number of micro indentations.

4. A wheel bearing apparatus for a vehicle of claim 3 wherein the indentations of the core metal (20, 23, 27) are formed by shot blasting and have the surface roughness of Ra 1.6 or less.

5. A wheel bearing apparatus for a vehicle of claim 1 wherein the core metal (20, 23, 27) comprises a disc-shaped portion (20a, 23a, 27a), a cylindrical portion (20b, 23b) axially extending from a radially outermost portion of the disc-shaped portion (20a, 23a, 27a), and an anchoring portion (20c, 23c) projecting radially inward from the cylindrical portion (20b, 23b), wherein the molded portion (21, 24, 28) is adhered to the disc-shaped portion (20a, 23a, 27a), and wherein the inner diameter of the anchoring portion (20c, 23c) of the core metal (20, 23, 27) is set slightly smaller than the outer diameter of the caulked portion (6, 29).

6. A wheel bearing apparatus for a vehicle of claim 5 wherein the core metal (20) is formed as an open ended ring shape.

7. A wheel bearing apparatus for a vehicle of claim 5 wherein a plurality of the anchoring portions (23c) are formed equidistantly along the periphery of the core metal (27).

8. A wheel bearing apparatus for a vehicle of claim 1 wherein lubricant is applied between the caulked portion (6, 29) and the shoulder portion (15) of the outer joint member (14).

9. A wheel bearing apparatus for a vehicle of claim 8 wherein a number of through apertures (25) are formed on the disc-shaped portion (23a) of the core metal (23).

10. A wheel bearing apparatus for a vehicle of claim 1 wherein the end face of the caulked portion (6, 29) and the shoulder portion (15) of the outer joint member (14) have the surface roughness of Ra 1.6 or less.

11. A wheel bearing apparatus for a vehicle of claim 1 wherein the end face of the caulked portion (29) is formed with an annular groove (29a), and wherein the disc-shaped portion (27a) of the core metal (27) is formed with an annular projection (30) axially projected therefrom so as to be engaged with the annular groove (29a).

12. A wheel bearing apparatus for a vehicle of claim 1 or 2 wherein the molded portion (21, 24, 28) is formed of fiber reinforced thermoplastic synthetic resin.

13. A wheel bearing apparatus for a vehicle of claim 1 or 2 wherein the molded portion (21, 24, 28) is formed of biodegradable synthetic resin.
